# EUROPEAN PATENT APPLICATION

(11) **EP 1 969 942 A1**
(43) Date of publication of application: **17.09.2008**
(21) Application number: 07425149.7
(22) Date of filing: 16.03.2007
(51) Int. Cl.: A21C 1/00, B01F 13/10, B01F 7/18, B01F 7/02, B01F 7/24, B01F 15/00

(54) **Kneading machine for producing a sequence of dough batches**

(71) Applicant: SANCASSIANO S.p.A., I-12060 Roddi d'Alba (Cuneo) (IT)
(72) Inventor: Drocco, Davide, 12060 Roddi d'Alba (Cuneo) (IT); Sitia, Giuseppe, 12060 Roddi d'Alba (Cuneo) (IT)
(74) Representative: Notaro, Giancarlo

(57) **Abstract**

Described herein is a machine for the production of dough mixes, in particular dough mixes for foodstuffs, characterized in that it comprises:
- a plurality of chambers (2), set in succession and communicating with one another via respective passages (3) for enabling a flow of dough from each chamber to the next one; and
- at least one kneading implement (5) provided in each chamber (2).

## Description

The present invention relates to a machine for producing dough mixes, in particular dough mixes for foodstuffs.

In the production of dough mixes for foodstuffs it is preferable, if not fundamental, not to leave amounts of dough standing for long periods of time at an intermediate point of the process, in order to prevent the chemical and physical properties of the dough from being altered. In the case of production of large quantities of dough per hour, the use of machines for the production of dough mixes in batches is thus undesirable in so far as these envisage the production of large batches of dough within a tank, which, once the kneading step is completed, stand waiting to be used up by a subsequent step of the process.

For this reason, for large productions per hour of dough, machines are generally used for producing dough mixes on a continuous production line, in which a continuous flow of product is generated starting from a first step of introduction of the ingredients up to a final step of completion of the product.

Traditional machines for the continuous production of dough mixes are generally formed by a dough trough traversed by a flow of material to be kneaded, within which kneading implements are present, designed for carrying out the kneading operation. This type of machine presents multiple complications and disadvantages.

A first problem that is encountered with continuous machines is represented by the process of dosing of the ingredients. It is required in fact, coherently with the type of operation of the machine, that dosing of the ingredients should be of a continuous type. This type of dosing presents multiple technical difficulties in so far as the continuous flows for introducing the respective ingredients must be constantly controlled. The setting-up of continuous dosing systems is very laborious and involves complicated interventions in the case where it is desired to vary the doses or the type of ingredients of the dough.

Furthermore, in traditional machines with continuous operation it is necessary to envisage a premixing of the ingredients in an area separated from the dough trough, into which they are subsequently poured so as to be kneaded. In fact, the dough trough generally has, throughout its length, one and the same section of flow and, since inside it there are no means for controlling the flow of dough, for a homogeneous and constant flow to be generated it is necessary to make sure that a product of substantially similar consistency is present along the entire dough trough. In the case where the ingredients were to be poured directly into the dough trough, the ones that are characterized by a part that is still very liquid would be able to advance more easily so that they would be mixed with other batches of dough and would thus falsify the dosing proportions.

Machines for continuous production of dough mixes of a traditional type are consequently very complex and in any case very rigid as regards their settings for operation. It is in fact extremely complicated to control the kneading environment defined by the aforementioned dough trough so as to be able to obtain different productions of dough.

The purpose of the present invention is to provide a solution the aforesaid disadvantages by providing a simple and efficient machine that at the same time affords a more flexible operation and that is well suited to different production requirements.
The purposes referred to above are obtained with a machine for the production of dough mixes, in particular dough mixes for foodstuffs, characterized in that it comprises:
- a plurality of chambers set in succession and communicating with one another via respective passages for enabling a flow of dough from each chamber to the next one; and
- at least one kneading implement provided in each chamber.

The machine according to the invention presents the advantage of providing a production of dough mixes, which is based upon a substantially continuous production line in the sense that it envisages a flow of material that has conditions of treatment that develop as the flow advances and which hence presents the advantages described previously but at the same time is prearranged to be able to be more efficiently set and controlled according to the requirements of a user. In fact, the provision of the aforesaid plurality of chambers enables actuation, for each chamber, in a simple and effective way of a control of the kneading operation performed therein, and in this way the operation of the machine is controlled in each stage of treatment defined within each chamber. In the machine according to the invention there is thus generated an intermittent flow of dough, or sequence of batches of dough, through the entire succession of chambers. The dough presents a degree of preparation that evolves as it advances in the succession of chambers.

The machine for the production of dough mixes according to the invention moreover presents the advantage of enabling dosing in discrete amounts of the ingredients in the same chambers in which the kneading operation takes place. In fact, within each chamber of the machine according to the invention it is possible to introduce discrete amounts of ingredients, which are kneaded together within each chamber to generate at outlet from the chamber a discrete amount of dough at a given condition of kneading. This discrete amount of dough is separated from other discrete amounts of dough that are in the other chambers comprised in the machine according to the invention.

The machine according to the invention enables a high degree of flexibility of the kneading process. In fact, for example, ingredients can be added, in discrete amounts, in any of the chambers of the sequence. As stated previously, each chamber can be governed independently by the others so as to render control of the dough in each chamber of the sequence more efficient. For example, for each chamber the speed of rotation of the kneading implements and the conditions within the chamber, such as the pressure and the temperature, can be controlled. The chambers can envisage, for example, means that regulate the temperature, which prove of fundamental importance, above all in the advanced stages of the kneading process, in which the exothermal reactions that occur within the dough generate large quantities of heat that must be dissipated to prevent an excessive rise in the temperature from jeopardizing the characteristics of the dough.

Furthermore, thanks to the possibility of controlling the individual chambers separately it is further possible to set conditions of the individual chambers that are different for different discrete amounts, so as to obtain at outlet in succession from the machine discrete amounts of dough that have characteristics of a different type; for instance, the amounts of dough that exit in succession from the machine can present ingredients, or else a degree of kneading, that are different.

In a preferred embodiment, in at least one of the chambers of the machine, means are provided for adjusting the width of said passages of communication between said chamber and the subsequent one.

In a further preferred embodiment, the adjustment means comprise a mobile wall.

The present invention moreover envisages a method for the production of dough mixes presenting the characteristics specified in Claim 29.

Further characteristics and advantages will emerge clearly from the attached plate of drawings, which are provided purely by way of non-limiting example and in which:
Figure 1 is a schematic front cross-sectional view of the machine according to the invention;
Figure 2 is a top plan view of the machine of Figure 1;
Figure 3 is a generic cross-sectional view of the machine according to the invention;
Figure 4 is a schematic front cross-sectional view of a further embodiment of the machine according to the invention;
Figure 5 is a generic cross-sectional view of a further embodiment of the machine according to the invention;
Figure 6 is a schematic front cross-sectional view of a further embodiment of the machine according to the invention;
Figure 7 is a plan view of the machine of Figure 6;
Figure 8 is a schematic front cross-sectional view of a further embodiment of the machine according to the invention;
Figure 9 is a schematic front cross-sectional view of a further embodiment of the machine according to the invention;
Figure 10 is a schematic front cross-sectional view of the machine of Figure 5; and
Figure 11 is a schematic plan view of a tank forming a dough chamber according to the invention.

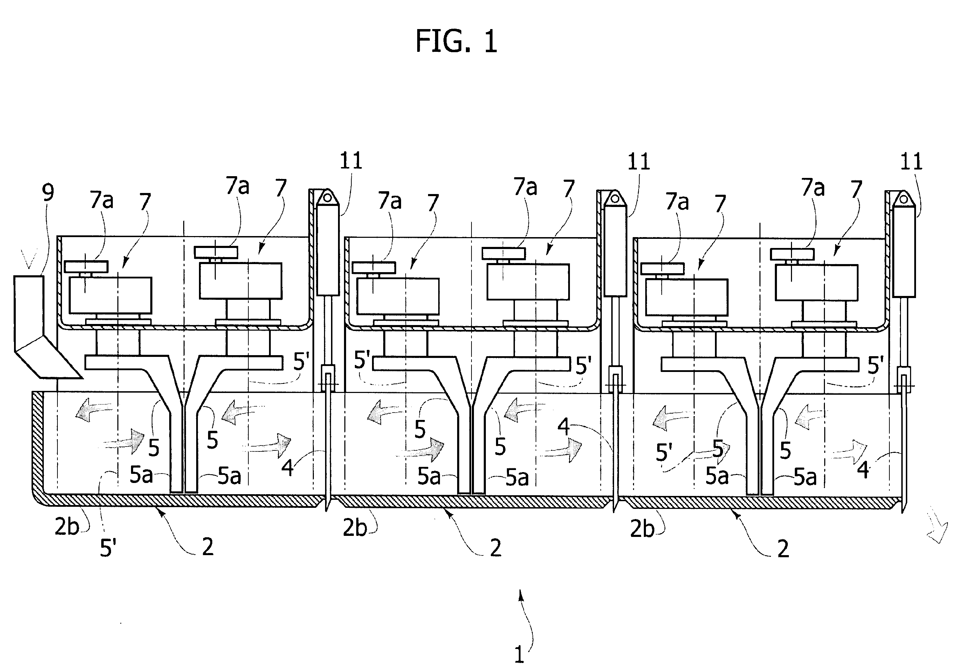

With reference to Figure 1, a machine for the production of dough mixes according to the invention is designated by the reference number 1. This machine comprises a linear succession of fixed tanks 2 set on one and the same plane of resting. Each tank 2 has a passage 3 that sets it in communication with the other tanks 2 bordering thereon. Present in the passage 3 are adjustment means that comprise a wall 4, which is mobile in the vertical direction (as viewed in Figure 1) between a raised position and a lowered position in which the passage 3 is respectively completely open or else obstructed.

The adjustment means moreover comprise hydraulic control members 11, designed to actuate the movement of the mobile walls 4. Control means (not illustrated) are further provided for controlling the adjustment means.

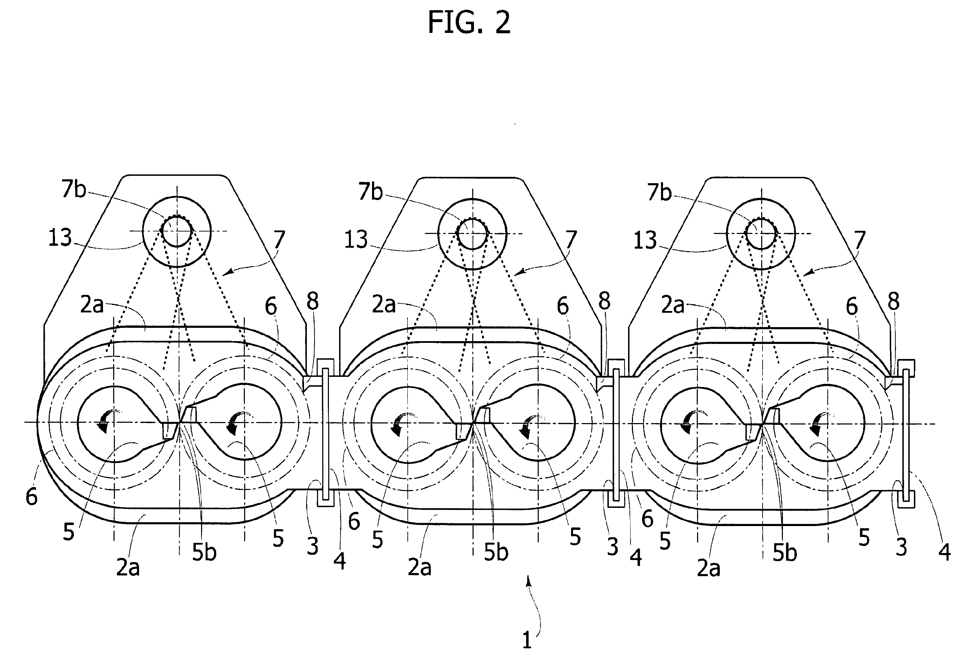

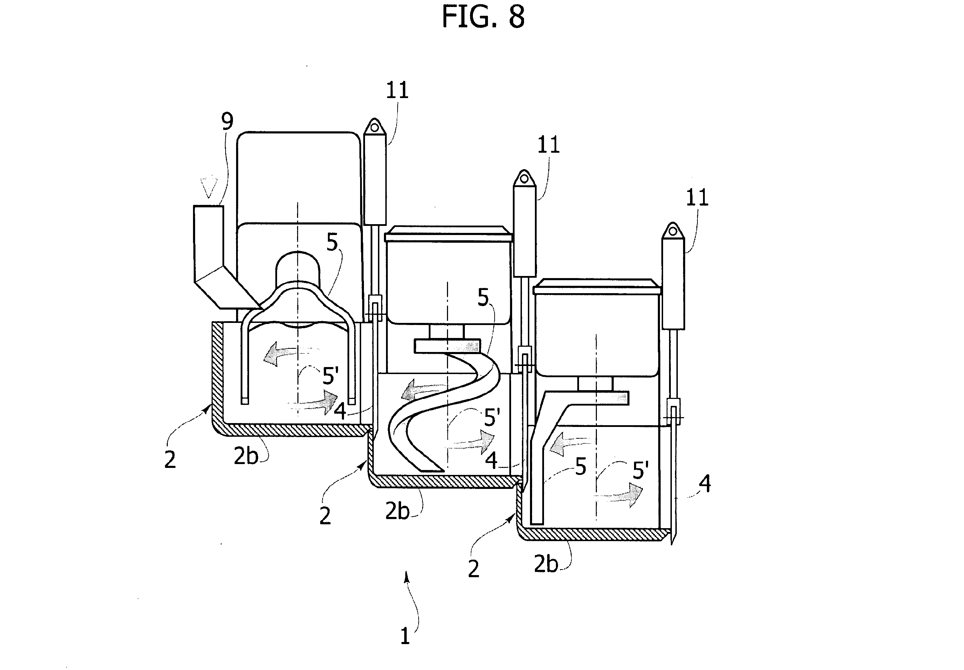

Each fixed tank 2 moreover comprises two kneading implements 5 that can turn about respective mutually parallel axes of rotation 5' perpendicular to the bottom 2b of the tank 2. The kneading implements 5 rotate according to the same direction of rotation and ideally generate, during said rotation, respective theoretical cylinders of revolution 6 (Figure 2). As may be seen in Figure 8, it is likewise possible to provide also just one kneading implement for each tank 2. However, the provision of two kneading implements 5 is to be preferred because they can exert a more effective synergistic kneading action.

The succession of fixed tanks 2 defines a succession of independent kneading chambers, in each of which it is possible to perform a kneading treatment that differs from the corresponding treatments performed in the other chambers in at least one of the working conditions, amongst which, for example, the temperature, the pressure, the type of implements or their speed of rotation, the type of ingredients, etc.

Alternatively, the succession of kneading chambers can be provided, envisaging a fixed tank of appropriate dimensions that is divided into sectors via mobile walls, each constituting a respective kneading chamber.

In the embodiments illustrated in Figures 1 to 4, the kneading implements 5 are each formed by an arm 5a preferably having a polygonal cross section, which has a sharp edge, forming a cutting edge, in the area of the arm facing in the direction of advance and towards the outside of the circular path followed by the arm. In the example of embodiment described herein, said sharp edge is designated by 5b.

The arm 5a extends for a substantially rectilinear part of its length and in a direction substantially parallel to the generatrix of the theoretical cylinder of revolution 6. Alternatively, the arm of the kneading implement of the type illustrated in Figures 1 to 4 can present a rectilinear portion that extends inclined with respect to the generatrix of the theoretical cylinder of revolution 6 by an angle not sensibly greater than 10°.

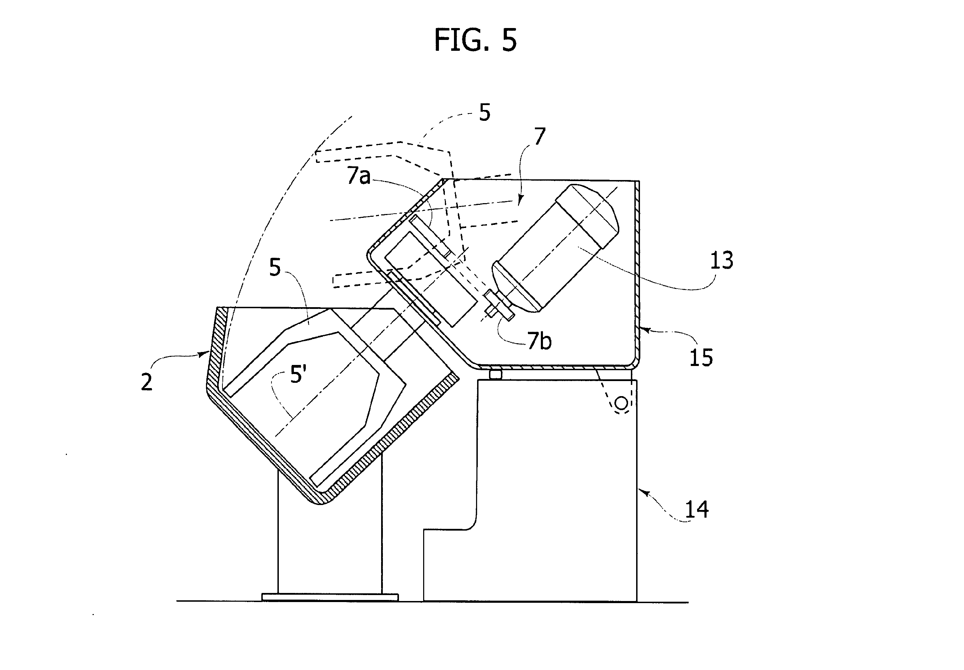

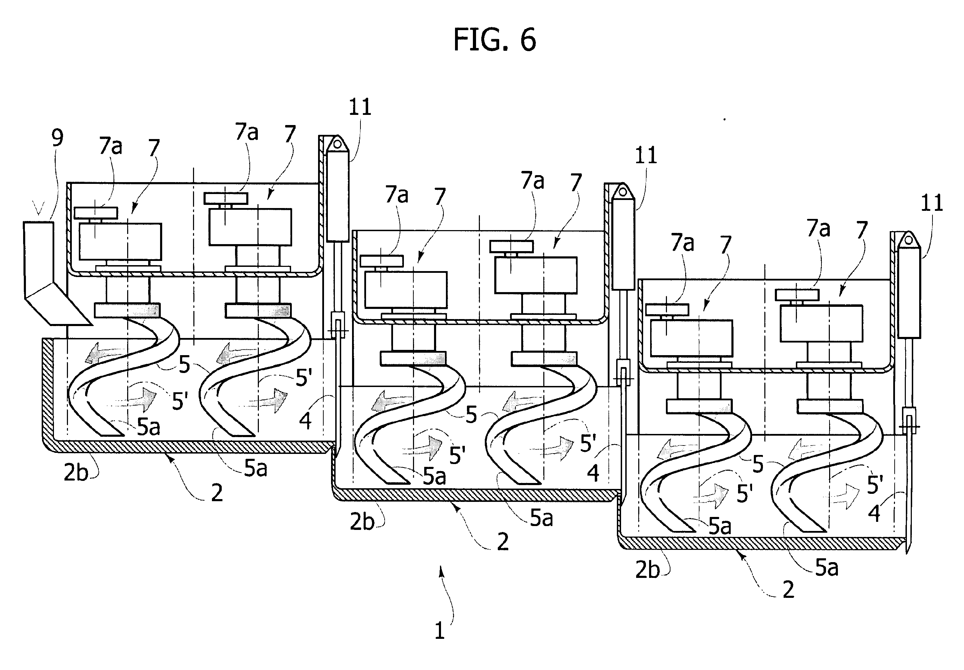

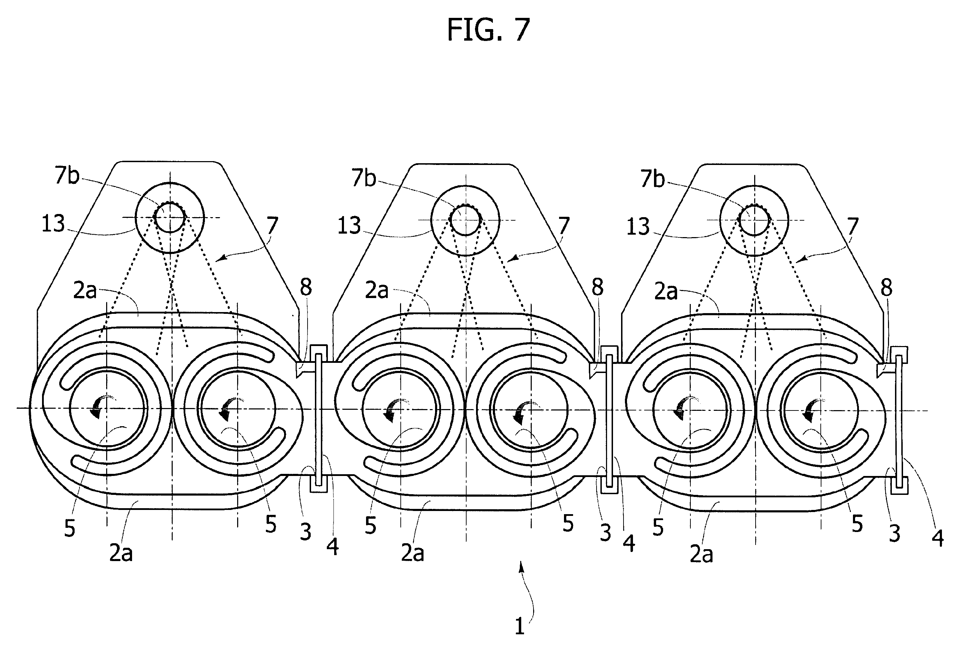

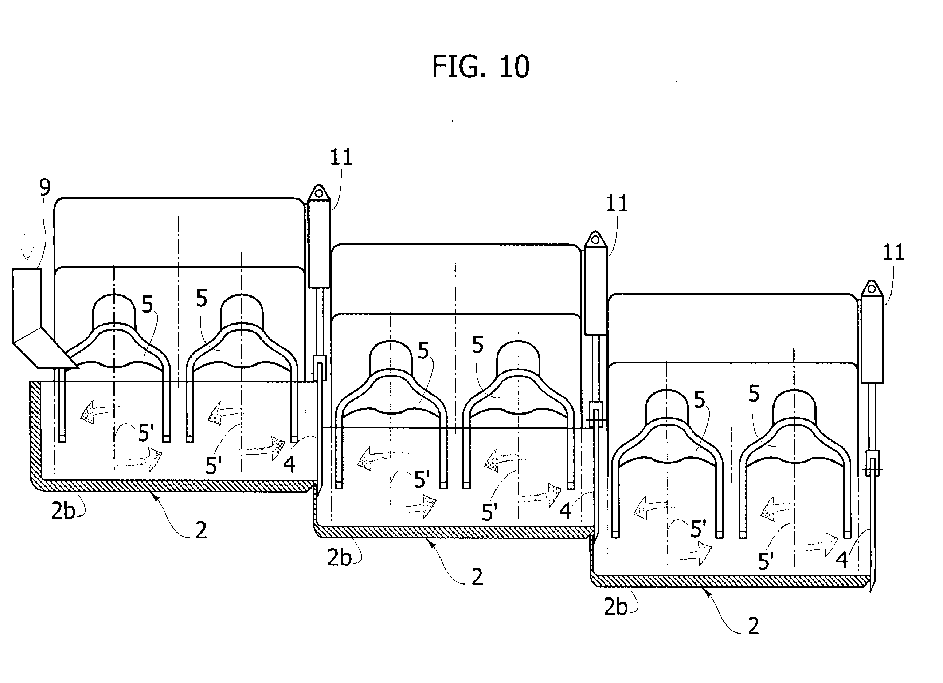

Figures 5 to 8, and 10 show solutions of the machine according to the invention that envisage further types of kneading implements 5, and in particular in Figure 8 different types of kneading implements 5 are provided for each tank 2.

As may be seen in Figure 2, the two theoretical cylinders of revolution 6 of the kneading implements 5 occupy substantially the entire longitudinal space available within the tank 2. In this way, the pair of kneading implements 5 is able to carry the dough, which is worked by them, from one end to the other of the tank 2. Furthermore, the tanks 2 have peripheral walls 2a substantially adherent to the theoretical cylinders of revolution 6.

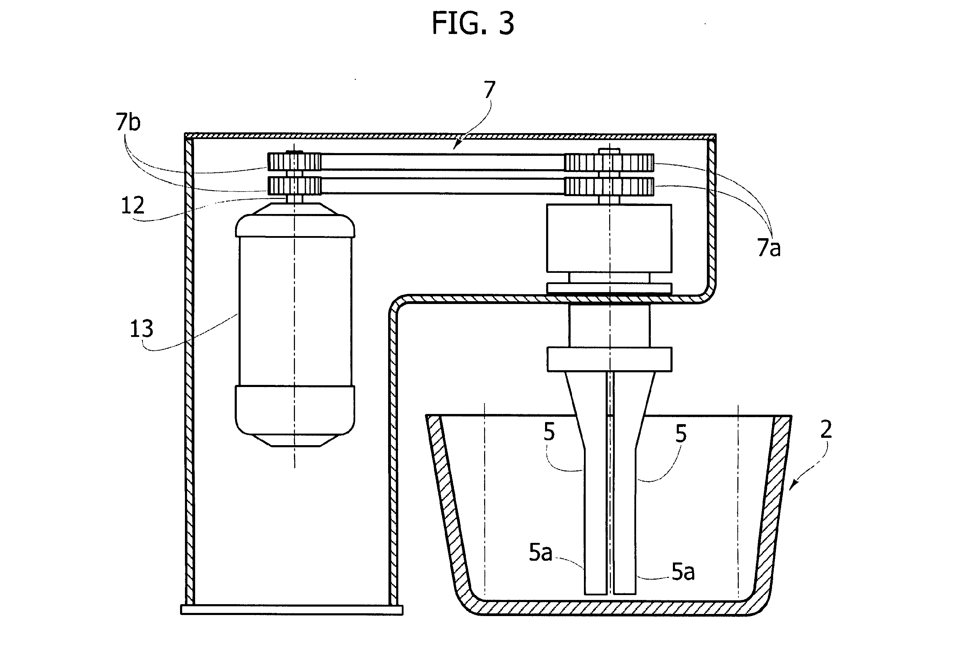

Present on each tank 2 are actuation members 7, designed to control rotation of the respective kneading implements 5. As illustrated in Figure 3, the actuation members comprise a respective pulley 7a connected to each kneading implement 5 via a gearcase. The pulleys 7a are connected, via respective drive belts, to respective pulleys 7b carried by one and the same shaft 12 of a motor 13. The kneading implements of one and the same tank possess then a synchronised movement of rotation. Preferably, the kneading implements 5 of one and the same tank 2 are synchronised in such a way that the sharp edges 5b pass substantially simultaneously in the area of tangency of the respective theoretical cylinders 6, intercrossing with opposite directions of movement, on account of the concordant rotation of the two implements. In this way, at the point of tangency of the two theoretical cylinders of revolution the two kneading implements 5 co-operate so as to exert a shearing action on the dough, which improves the quality of the kneaded product.

Furthermore, since the peripheral walls 2a of the tanks 2 are substantially adherent to the theoretical cylinders of revolution 6, the kneading implements 5 perform an additional action of squeezing of the dough against the aforesaid peripheral walls 2a.

Present at the side downstream of each tank 2, with reference to a flow of dough that traverses the succession of tanks of Figure 1 from left to right, is a conveying member 8 that is set in a position corresponding to the edge delimiting the passage 3 of a peripheral wall 2a. The conveying member 8 comprises a projecting distal end with sharp edge 8b that extends tangentially with respect to the theoretical cylinder of revolution downstream of each tank 2. In operation, the kneading implement 5 downstream of each tank 2 has a direction of rotation such that the sharp edge 5b of the kneading implement 5 is brought towards the conveying member 8 coming from the part the end 8b of the latter projects thereinto.

The first tank of the succession of tanks of Figure 1 has a conduit 9 for introduction of the ingredients into the first tank, and the last tank of the succession of Figure 1 has further adjustment means 4 in a position corresponding to a further passage 3 for discharge of the dough from the machine. Alternatively, in a position corresponding to the last tank of the succession of Figure 1 there can be provided discharging means, which turn the tank 2 over to discharge the dough.

With reference to Figures 1 and 2, the operation of the machine for continuous production of dough mixes according to the invention envisages the introduction of the ingredients of the dough into the first tank of the succession through the conduit 9. The ingredients poured into the first tank are then mixed and kneaded via the action of the kneading implements 5. The configuration of the tanks 2 is such that there is no risk of the ingredients of the dough that are not yet amalgamated being carried into the next tanks of the succession, so altering the relative dosing proportions of the ingredients.

Since, as it has been emphasized previously, the tanks 2 form independent kneading chambers, the introduction of the ingredients into each tank occurs according to discrete quantities, as occurs in kneading machines for production in batches of a conventional type.

The control of dosing for the machine according to the invention is hence extremely simple and requires only means of dosage that are set on the basis of the quantity in weight of ingredient to be introduced and of the proportions between the various ingredients.

In the case where ingredients are added also in the next tanks in the succession, the dosing of the ingredients occurs with reference to the quantities in weight of the ingredients introduced into the first tank and to the proportions between the ingredients of the first tank and the ingredients to be introduced.

In the operation of the machine according to the invention, the quantity of ingredients introduced into the first tank traverses in succession in an intermittent way all the tanks of the machine, in each of which degree of preparation of the dough increases until it exits from the machine as a finished kneaded product. During operation, the adjustment means comprising the mobile walls 4 can be activated so as to vary the width of the passages 3 and thus adjust the intermittent flow between the respective tanks.

An example of operation of the machine according to the invention is described in detail hereinafter.

In the first tank of the succession, ingredients are introduced that come to form a first amount of dough. The first amount of dough is worked in the first tank 2 by the two kneading implements 5, which act simultaneously on the dough by exerting a highly efficient kneading action. In the case of the embodiment illustrated in Figures 1 to 4, the kneading implements 5 exert a synergistic shearing action on the dough in a region corresponding to their reciprocal area of tangency, as described previously. The first quantity of dough is then brought by the kneading implement 5 downstream into a position corresponding to the passage 3 in communication with the next tank 2. The first amount of dough then traverses the passage 3, reaching the second tank of the succession of tanks 2. At the same time, the ingredients of a second discrete amount of dough are introduced into the first tank.

The intermittent flow of dough between the tanks is to be considered dependent only upon the rotation of the kneading implements 5, which, in addition to kneading the dough, function as conveyors of the dough from one tank to the next one.

The conveying member 8 provided in the embodiment described herein acts so as to intercept and free the first amount of dough from the kneading implement 5, to direct it towards the next tank. The conveying means 8 thus increases the efficiency of the machine considerably in so far as it is able to increase the quantity of flow of dough that traverses the tanks, given the same speed of rotation of the kneading implements.

Kneading of the first amount of dough continues within the second tank according to the procedure described for the first tank, and the dough is subsequently carried by the downstream kneading implement 5 into a position corresponding to the passage 3 in communication with the last tank of the succession illustrated in Figures 1 and 2, where it is finally poured. In the same way, the second amount of dough is worked within the first tank and subsequently flows into the second tank.

During the operation described above, the mobile walls 4 can be selectively activated to govern the intermittent flow generated through the tanks by the action of the kneading implements 5.

In one example of operation, the control means can envisage an activation of the mobile walls 4 from a first position to a second position, in which, in the first position, each wall 4 obstructs the corresponding passage 3 completely, and in the second position this is at least partially open. This control of the mobile wall 4 of the "on/off" type enables the kneading implements 5, when the mobile wall 4 is completely lowered, to exchange the amounts of dough a number of times between one another to exert a kneading action that is extremely intense and hence to be preferred in some applications.

According to this example, in an initial step of the operation of the machine, in which the fixed tanks 2 are initially empty and are filled in succession, the adjustment means 4 are activated in sequence by the control means, starting from the adjustment means of the first tank up to the adjustment means of the last tank, in order to fill all the tanks of the machine one after another.

Once a steady-running condition is reached, in which all the tanks contain a quantity of dough, the adjustment means are activated in another way, starting from the means of the last tank and terminating with the means of the first tank.

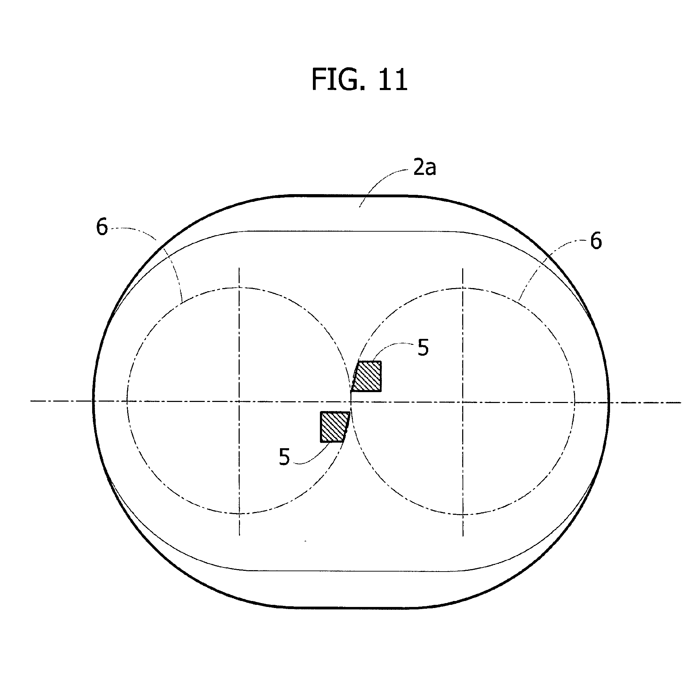

The present applicant has found that the ratio between the volume occupied as a whole by the theoretical cylinders of revolution and the free volume provided within the tank likewise constitutes an important parameter that affects the efficiency of the conveyance of the dough between the tanks, which is performed by the kneading implements. In particular, it has been noted that a value of the aforesaid ratio comprised between 0.4 and 0.8 leads to an optimal operation of the machine according to the invention, in which the best effectiveness of the kneading action and of the action of conveyance provided by the kneading implements is obtained. In this connection, in order to obtain high values of said ratio it is possible to envisage tanks in which the walls follow substantially the contour of the theoretical cylinders generated by the kneading implements. For example, in the case of two kneading implements for each tank, tanks having a shape in plan view like a figure eight may be provided. In the case, instead, where just one implement is present, then the tank will be substantially circular. Figure 11 illustrates an example of a single tank of the machine according to the invention, in which the kneading implements occupy a volume substantially equal to half of the internal volume of the tank.

The control means of the machine according to the invention can comprise a central processor, through which the user can set the sequences of actuation of the adjustment means, or else comprise manual pushbuttons provided on each tank, which control the actuation of the respective adjustment means.

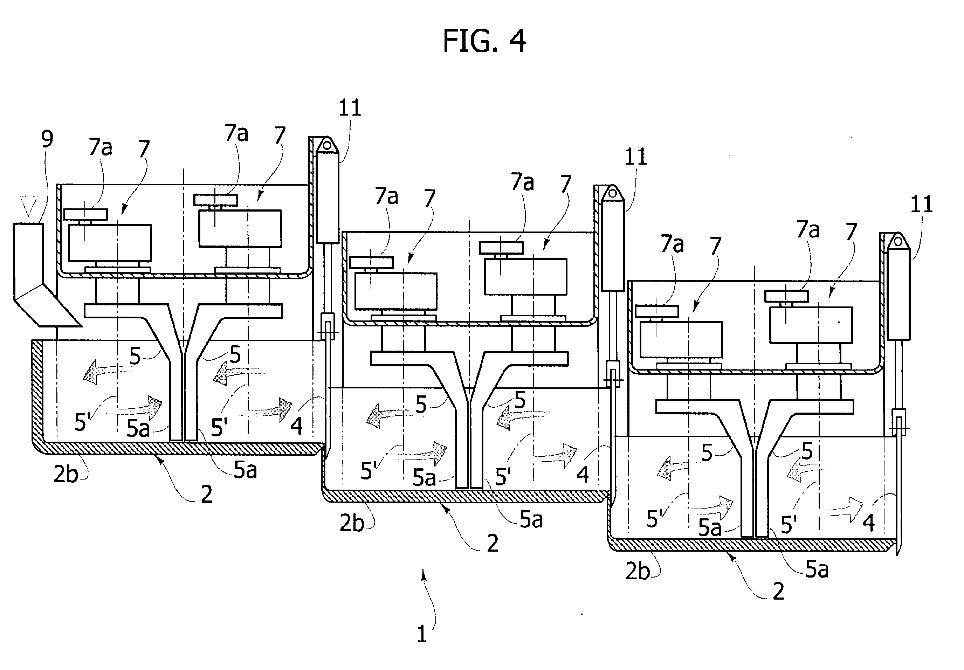

Figure 4 represents a second embodiment of the machine according to the invention. In this embodiment, the succession of tanks is formed by tanks set respectively on surfaces that degrade concordantly with the development of the succession itself. This particular arrangement of the tanks favours the intermittent flow by the force of gravity from one tank to the next, likewise preventing a possible reflux of portions of dough from one subsequent chamber back to the previous one. Likewise, Figures 5 to 10 illustrate alternative embodiments of the machine according to the invention, in which there is likewise provided a succession of tanks set on surfaces that degrade concordantly with the development of the succession itself.

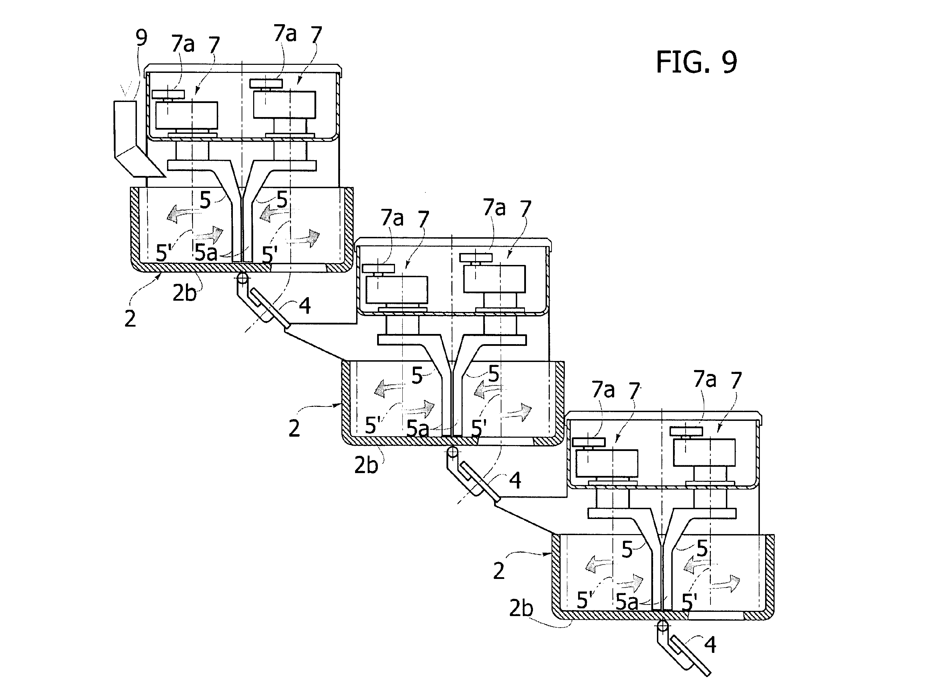

In Figure 9, the distance between the respective surfaces that degrade, identified by the bottoms 2b of the tanks 2 of the succession, is such that, in this embodiment the passage 3 is preferably made on the bottoms of the tanks 2.

The adjustment means are constituted by a respective hatch 4, set so that it can turn in the plane of the figure and located underneath each tank.

The hatch 4 can be moved between a first position, in which it closes the passage 3, and a second position in which the passage 3 is open and at the same time the hatch 4 acts so as to direct the dough into the underlying tank. In this case, the second and third tanks of the succession comprise, in a position corresponding to the side upstream of the tank, a mouth 14 with a chute-like conformation, designed to convey the amount of dough directed by the hatch 4 into the tank.

In the operation of the embodiment illustrated in Figure 9, it is preferable to provide a control of the hatches 4 in which, during kneading of the dough within the respective tanks, the hatches 4 are in the aforesaid first position and subsequently are activated to move into the second position to cause the amount of dough to drop by the force of gravity into the respective underlying tanks.

Thanks to the present invention, machines are provided for the production of dough mixes, in particular dough mixes for foodstuffs, which are suited for producing large quantities of dough per hour according to an arrangement of a continuous type and which at the same time are effectively controllable and programmable so as to obtain dough mixes of high quality and with chemico-physical properties that vary according to the production needs.

Of course, the details of construction and the embodiments of the invention may vary widely with respect to what is described and illustrated herein, without thereby departing from the scope of the present invention, as defined in the ensuing claims.

## Claims

1. A machine for the production of dough mixes, in particular dough mixes for foodstuffs, **characterized in that** it comprises:
- a plurality of chambers (2), set in succession and communicating with one another via respective passages (3) for enabling a flow of dough from each chamber to the next one; and
- at least one kneading implement (5) provided in each chamber (2).

2. The machine according to Claim 1, **characterized in that**, for at least one of the chambers (2), means (4) are provided for adjusting the width of said passages (3) for communication.

3. The machine according to Claim 2, **characterized in that** said adjustment means comprise a mobile wall (4).

4. The machine according to Claim 3, **characterized in that** said wall (4) is mobile between a closed position, in which it prevents communication between two chambers, and an open position, in which it enables said communication.

5. The machine according to Claim 1, **characterized in that** said succession of chambers is formed by a succession of fixed tanks (2).

6. The machine according to Claim 3, **characterized in that** said mobile wall (4) is constituted by a portion of the peripheral wall of a respective tank (2).

7. The machine according to Claim 3, **characterized in that** said mobile wall (4) is constituted by a portion of the bottom wall of a respective tank (2).

8. The machine according to Claim 1, **characterized in that** said succession of chambers is formed by a fixed tank that is divided into sectors, constituting said chambers, via one or more of said mobile walls (4).

9. The machine according to Claim 1, **characterized in that** said at least one kneading implement (5) has an axis of rotation (5') that in dough-mixing operations is fixed with respect to the respective chamber (2).

10. The machine according to Claim 1, **characterized in that** said at least one kneading implement (5) defines a theoretical cylinder of revolution (6) of a volume comprised between 40% and 80% of the free volume in the respective chamber (2).

11. The machine according to Claim 1, **characterized in that** said at least one kneading implement (5) is pre-set to skim one or more walls (2a) delimiting said chambers (2) so as to create an action of squeezing of the dough against said walls.

12. The machine according to Claim 1, **characterized in that** said at least one kneading implement (5), for a part of its length, is substantially rectilinear and extends in a direction substantially parallel or inclined with respect to a generatrix of said theoretical cylinder of revolution (6) by an angle not sensibly greater than 10°.

13. The machine according to Claim 1, **characterized in that** said at least one kneading implement (5) is a spiral kneading implement.

14. The machine according to Claim 1, **characterized in that** said at least one kneading implement (5) is a forklike implement with inclined axis.

15. The machine according to Claim 1, **characterized in that** it comprises two kneading implements (5) for each chamber (2).

16. The machine according to Claim 15, **characterized in that** said two kneading implements (5) are of types different from one another.

17. The machine according to Claim 15, **characterized in that** said two kneading implements (5) define respective theoretical cylinders of revolution (6) that occupy as a whole a volume equal to a value comprised between 40% and 80% of the free volume in the respective chamber (2).

18. The machine according to Claim 5, **characterized in that** said tanks have a shape in plan view included in the group comprising rectangular and conical shapes or is in the form of a figure eight.

19. The machine according to Claim 1, **characterized in that** the first chamber of said succession of chambers is associated to means for introducing the ingredients of the dough (9).

20. The machine according to Claim 1, **characterized in that** the last chamber of said succession of chambers is associated to means (3, 4) for discharging the dough from said machine.

21. The machine according to Claim 5, **characterized in that** said succession of chambers is formed by tanks (2) set in one and the same plane.

22. The machine according to Claim 5, **characterized in that** said succession of chambers is formed by tanks (2) set respectively on surfaces that degrade concordantly with the development of the succession itself.

23. The machine according to Claim 1, **characterized in that** it comprises control means designed to control the actuation of said adjustment means (4) associated to the respective chambers of the machine according to a predetermined sequence.

24. The machine according to Claim 6, **characterized in that** said portion of peripheral wall (4) can be actuated according to a roller-shutter movement.

25. The machine according to Claim 1, **characterized in that** said chambers comprise conveying means (8) designed to direct the dough in the direction of said flow.

26. The machine according to Claim 25, **characterized in that** said conveying means comprise a fixed member set in the vicinity of said adjustment means (4) in such a way as to intercept the dough worked by said at least one kneading implement (5) and direct it outside of the respective chamber (2).

27. The machine according to Claim 1, **characterized in that** at least one of said chambers has double walls, in which a space is provided for circulation of a fluid for controlling the temperature within the chamber.

28. The machine according to Claim 1, **characterized in that** one or more chambers (2) envisage means of airtight closing for insulation of said chambers from the outside world.

29. A method for the production of dough mixes, in particular dough mixes for foodstuffs, via a machine of the type comprising a plurality of chambers (2), set in succession and communicating with one another via respective passages (3) for enabling a flow of dough from each chamber to the next one, and at least one kneading implement (5) provided in each chamber, said method envisaging the introduction of the ingredients of dough in a first chamber, or else both in a first chamber and in further chambers of said succession, so as to create a flow of dough that moves from said first chamber towards a last chamber of said succession of chambers.

30. The method according to Claim 29, **characterized in that** it provides the use of means (4) prearranged for at least one of the chambers of said machine and designed to adjust the width of said passages (3) for communication is envisaged, said means (4) being actuated according to a predetermined sequence.

31. The method according to Claim 30, **characterized in that**, in an initial step of the operation of said machine, the actuation of said adjustment means (4) occurs in succession starting from the adjustment means of said first chamber and terminating with the actuation of the adjustment means of said last chamber.

32. The method according to Claim 30, **characterized in that**, in a step of steady running conditions of said machine, the actuation of said adjustment means occurs in succession, starting from the adjustment means of said last chamber and terminating with actuation of the adjustment means of said first chamber.

33. The method according to Claim 29, **characterized in that** the introduction of ingredients into one or more chambers of said succession occurs according to discrete quantities.
